Europäisches Patentamt

European Patent Office

Office européen des brevets

(19)

(11) Publication number: 0 258 834

A1

(12) **EUROPEAN PATENT APPLICATION**

(21) Application number: 87112521.7

(22) Date of filing: 28.08.87

(51) Int. Cl.⁴: G01F 23/28 , //F02M17/02

(30) Priority: 02.09.86 JP 133704/86

(43) Date of publication of application:
09.03.88 Bulletin 88/10

(84) Designated Contracting States:
DE FR GB IT

(71) Applicant: MIKUNI KOGYO KABUSHIKI KAISHA
13-11, Sotokanda 6-chome
Chiyoda-ku Tokyo(JP)

(72) Inventor: Muraji, Tetsuo c/o Mikuni Kogyo K.K.
Odawara Factory Kuno 2480
Odawara-shi Kanagawa-ken(JP)
Inventor: Masayoshi, Ikenoya c/o Mikuni
Kogyo K.K.
Odawara Factory Kuno 2480
Odawara-shi Kanagawa-ken(JP)

(74) Representative: Zenz, Joachim Klaus,
Dipl.-Ing. et al
ZENZ & HELBER Patentanwälte Am
Ruhrstein 1
D-4300 Essen 1(DE)

(54) Liquid level sensing device.

(57) A liquid level sensing device provided with a light source (3) arranged to emit a light ray along a plane normal to a transparent pipe body (1) at a predetermined position of height in the pipe body and to direct the light ray, at an incident point of the light ray on an outer peripheral surface of the pipe body, so as to make a certain angle ($\theta$) with a normal drawn from the peripheral surface; a light-receiving device (4) arranged on a traveling path (7) of the light ray traversing the pipe body when a clear liquid lies at the predetermined position of height in the pipe body; and an output control circuit connected to the light-receiving device and generating outputs with levels different from each other in cases where the light-receiving device receives the light ray and not, in order to be able to detecting rapidly and securely whether or not the clear liquid lies at the predetermined position of height in the transparent pipe body provided upright. This liquid level sensing device can be used for fuel flow rate control of a carburetor.

FIG. 5

# LIQUID LEVEL SENSING DEVICE

## Background of the invention

### a) Field of the invention:

The present invention relates to a liquid level sensing device detecting whether or not a clear liquid reaches a preset level of a transparent pipe or tube in which the above-mentioned liquid is contained and which stands upright and, more particularly, to a liquid level sensing device adapted to hold a preset fuel level without the use of a float in, for example, a carburetor for internal combustion engines in which a rapid response is demanded.

### b) Description of the prior art:

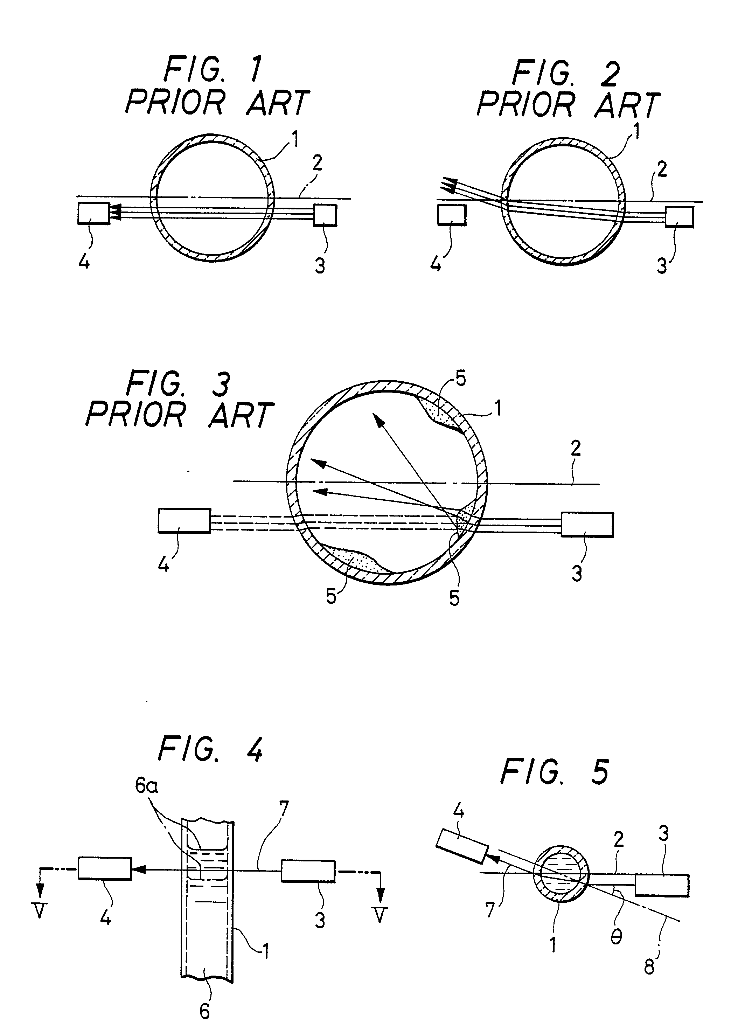

Japanese Patent Publication N. Sho 45-39433 discloses an example of liquid level sensing devices of the type. Refering to Figs. 1 and 2, this example is outlined below. Reference numberal 1 denotes a transparent cylindrical vessel shown as a plan view; 2 a center line extending along the diameter of the cylindrical vessel; 3 a light source disposed at the position deviated from the center line 2 and emitting a beam of light in parallel with the center line 2; and 4 a light-receiving device disposed opposite to the light source 3 with respect to the cylindrical vessel 1 on an extension line of the light beam emitted from the light source 3. While the light source 3 is turned on, the light beam coming from the light source 3 travels in a straight line to enter the light-receiving device 4 when the liquid is not contained in the vessel 1. However, when the liquid is not contained vessel 1, the light beam is refracted due to a prism function of the liquid and consequently fails to be incident on the light-receiving device 4. Thus, it is possible to sense whether or not the liquid level in the cylindrical vessel 1 is in a predetermined position of height.

Although this conventional method has an advantage that the liquid level can certainly be sensed even if the liquid is clear or unclear, there is a problem that, when the above method is used, for example, for fuel pressure (fuel flow rate) control in carburetors, a response speed is low with respect to the variation of the liquid level from the predetermined position of height in a transparent pipe corresponding to the vessel 1 and thus the control of the fuel flow rate cannot sufficiently be performed. That is, when raising and lowering of the fuel level is often repeated in the transparent pipe 1 as in a carburetor for internal combustion engines, fuel is liable to be kept adhering to an inner wall surface of the transparent pipe 1 even if the fuel level is lowered from the predetermined position of height, so that the refraction of rays of light with complicated variation causes only part of the light beam to be incident on the light-receiving device 4 and consequently a proper output signal may not be obtained from the light-receiving device 4. Fig. 3 shows the deviation from a normal traveling path or the state of dispersion of the light rays caused by fuel drops 5 adhering to the inside of the transparent pipe 1. That is, broken lines in Fig. 3 show an optical path along which the light rays travel when the fuel level is lowered from the predetermined position of height and the fuel drops 5 do not adhere to the pipe inside, while solid lines indicate optical paths along which the light rays travel when the fuel drops 5 adhere.

## Summary of the invention

It is, therefore, a primary object of the present invention to provide a liquid level sensing device of the type mentioned above such that when a liquid level in a transparent pipe is positioned below a predetermined position of height, it can securely be detected that the liquid level is lower than the predetermined position of height even in case liquid drops or liquid films attach to an inner wall surface of the transparent pipe.

It is another object of the present invention to provide a liquid level sensing device capable of being favorably used for fuel flow rate control of a carburetor for internal combustion engines.

According to the present invention, these objects are accomplished by providing an arrangement that a light-receiving device is disposed at a position such that, when a liquid exists at a predetermined position of height in a transparent pipe, a ray of light passing through the transparent pipe can be received and, when a liquid level in the transparent pipe is lowered from the predetermined position of height, even if liquid films or liquid drops adhere to the inner wall surface of the transparent pipe, the light ray refracted or dispersed thereby is not incident. Thus, the lowering of the liquid level from the predetermined position in the transparent pipe can be detected rapidly and securely and as a result, fuel flow rate control with a high degree of accuracy is permitted to be realized.

These and other objects as well as the features and the advantages of the present invention will be apparent from the following detailed description of the preferred embodiments when taken in conjunction with the accompanying drawings.

## Brief description of the drawings

Figs. 1 and 2 are views for explaining a basic arrangement and functions of prior art of a liquid level sensing device;

Fig. 3 is a view for explaining problems encountered when the liquid level sensing device shown in Figs. 1 and 2 is applied to fuel flow rate control of a carburetor;

Fig. 4 is a side view showing a basic arrangement of an embodiment of a liquid level sensing device according to the present invention;

Fig. 5 is a sectional view taken along line V-V in Fig. 4;

Fig. 6 is an enlarged view for explaining functions of the liquid level sensing device according to the present invention;

Fig. 7 is a view showing an example of an electric circuit used for the liquid level sensing device according to the present invention;

Fig. 8 is a schematic view showing a structure employed when the liquid level sensing device according to the present invention is applied to main fuel flow rate control of a carburetor; and

Fig. 9 is a schematic view showing a structure employed when the liquid level sensing device according to the present invention is applied to low-speed fuel flow rate control of a carburetor.

## Description of the preferred embodiments

In the beginning, referring to Figs. 4 and 5, the description of the present invention will be made in the following with respect to an embodiment in which the same reference numerals are used to designate devices or components which are substantially the same as in Figs. 1 through 3. Reference numeral 6 represents a clear liquid, that is, a liquid column existing in the transparent pipe body 1 and having a liquid level 6a. Reference numeral 7 denotes a traveling path of a light ray traversing the transparent pipe body 1 when the clear liquid 6 lies in the transparent pipe body 1, and the light-receiving device 4 is arranged on the traveling path of the light ray. The light source 3 is arranged in such a way that the light ray is emitted from the light source 3 in parallel with the segment 2 which is aligned with the diameter of the transparent pipe body 1 and that it travels into the liquid column 6, making an angle of θ with a normal 8 drawn at an incident point of the transparent pipe body 1. The light ray indicated by the solid line 7 lies in a horizontal plane traversing a specific position of height which is a reference plane for detecting the position of the liquid level 6a.

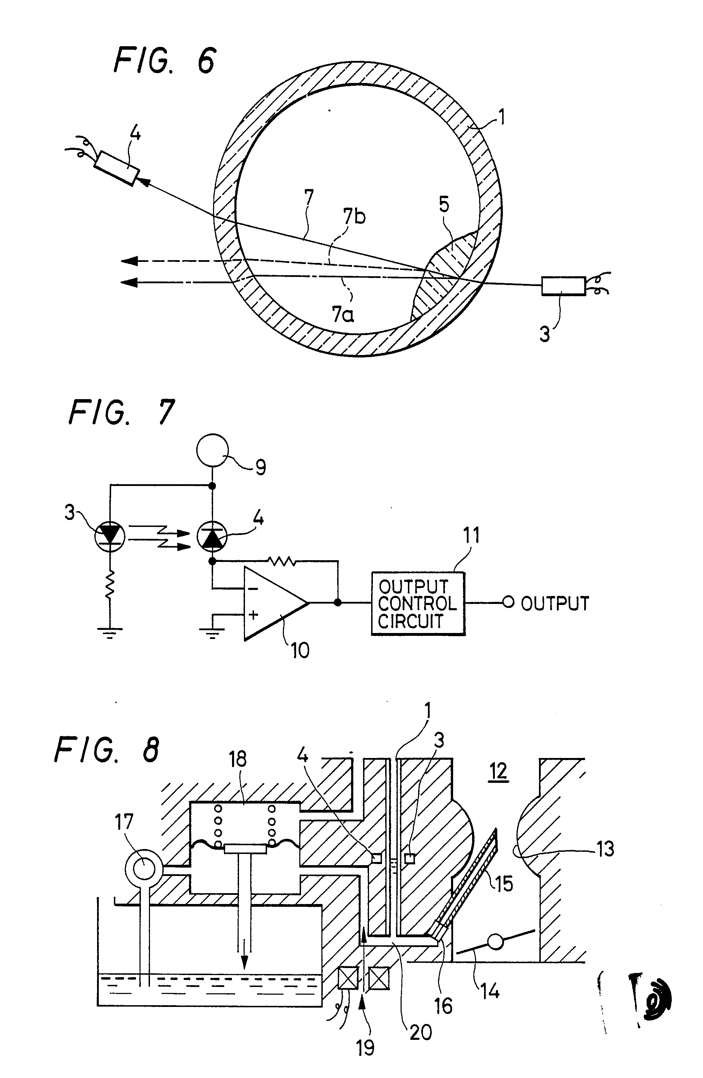

In Fig. 6, the solid line 7 shows the traveling path of the light ray traversing the transparent pipe body 1 when the clear liquid 6 exists at a position through which an inner light ray in the transparent pipe body 1 is to pass, that is, at a specific position of height in the transparent pipe body 1, a chain line 7a indicates the traveling path of the light ray when the liquid 6 does not lie at the specific position of height, and a broken line 7b shows the traveling path of the light ray when a film or a drop 5 of the clear liquid 6 adheres locally to the inner wall surface, at the specific position of height, of the pipe body 1. In such cases, to simplify this drawing, respective traveling paths 7, 7a, 7b of the light rays are drawn, based on the assumption that the refractive index of the pipe body 1 is equivalent to that of the liquid 6.

Fig. 7 shows an example of control circuits operated by an output delivered from the liquid level sensing device mentioned above. In this figure, reference numeral 9 represents a light source; 10 a differential amplifier; and 11 an output control circuit.

The arrangement of the liquid level sensing device according to the present invention is made as described above. As such, if the surface 6a of the liquid 6 in the pipe body 1 is positioned at a level higher than the position of height of the above reference plane, that is, for example, at a liquid level indicated by a solid line in Fig. 4, the light ray emitted from the light source 3 follows a path shown by the solid line 7 in Fig. 6 to traverse the pipe body 1 and then is received by the light-receiving device. From the light-receiving device, therefore, an output with a predetermined power is generated and as a result, the output of the differential amplifier becomes a low level. In contrast to this, when the liquid surface 6a in the pipe body 1 lies at a level lower than the position of height of the reference plane, that is, for example, at a liquid level represented by a broken line in Fig. 4, even if the liquid film and/or liquid drop 5 adhere to the inner wall surface, at the position of height of the reference plane, of the pipe body 1, the light ray emitted from the light source 3 follows a path indicated by the broken line 7b in Fig. 6 to traverse the pipe body 1 and consequently does not reach the light-receiving device 4. That is, in such a case, any light ray emitted from the light source 3 follows the paths within the range shown by the chain line 7a and the broken line 7b to traverse the pipe body 1 and fails to be incident on the light-receiving device 4. Accordingly, no output is produced from the light-receiving device 4 and as a result, the output of the differential amplifier 10 becomes a high level. According to the liquid level sensing device of the present invention as mentioned above, the raising and lowering of the liquid level 6a in the pipe body 1 can be sensed securely and rapidly with respect to the position of height of the reference plane.

Although the above embodiment has been described on condition that the light source 3 is set so that the rays of light travel properly in parallel with the liquid level 6a in the pipe body 1, it should be noted that this is not an essential requirement. That is, if the traveling path of the light ray is not parallel to the liquid level 6a, the light ray will intersect with the liquid level 6a and will be refracted or totally reflected when passing through the liquid level 6a. This behavior of the light ray, however, merely causes the liquid level to be sensed somewhat inaccurately and, for some purposes, the device can sufficiently be put to practical use.

Fig. 8 shows an example of the structure employed when the liquid level sensing device according to the present invention is utilized for controlling a main fuel system in a carburetor for internal combustion engines. That is, reference numeral 12 denotes a main intake passageway of the carburetor, 13 a fixed venturi; 14 a throttle valve; 15 a main fuel nozzle; 16 a main fuel jet; 17 a fuel pump; 18 a fuel pressure regulator; and 19 a solenoid valve whose exciting coil is connected to an output of the output control circuit 11 shown in Fig. 7 and which controls a flow rate of fuel flowing through a main fuel passageway 20. In such a case, since the transparent pipe body 1 is set directly to the main fuel passageway 20, the clear liquid 6 is fuel. Also, the output control circuit 11 is constructed as a pulse-width control circuitry so that when the output of the differential amplifier 10 has a low level, a continuous pulse different in width from that of the output with a high level is outputted and the solenoid valve is controlled by different duty factor. In this embodiment, any pressure somewhat higher than a setting value is applied to the fuel contained in the main fuel passageway 20 through the fuel pump 17 and the fuel pressure regulator 18 so that a fuel pressure corresponding to the setting value is exerted on the upstream side of the main fuel jet 16 by the duty control of the solenoid valve 19. In other words, when the height of a fuel column, that is, the level of a fuel surface in the transparent pipe body 1 is higher than the specific position of height (the setting value mentioned above), an opening valve duty is decreased and a lower level causes it to be increased so that the fuel pressure exerted on the upstream side of the main fuel jet 16 is always maintained at the above setting value and a proper amount of fuel corresponding to a flow rate of air taken into the main intake passageway 12 is jetted from the main fuel nozzle 5. Thus, a mixture of air and fuel fitting in with an operating condition can always be supplied to the engine.

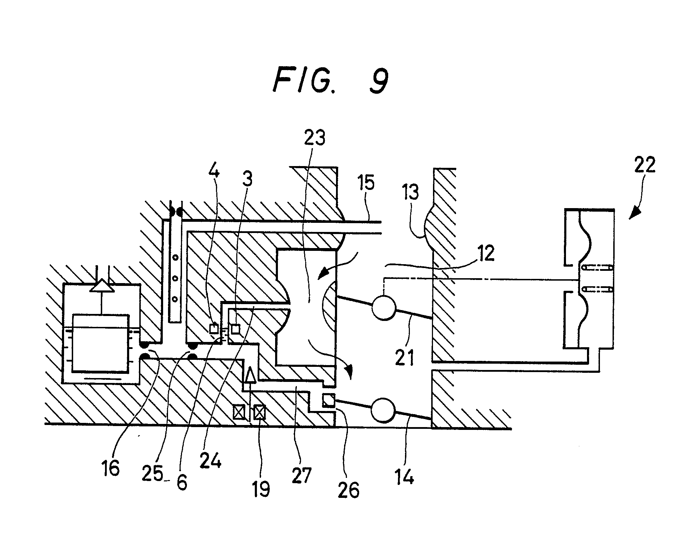

Fig. 9 indicates an example of the structure employed when the liquid level sensing device according to the present invention is utilized for controlling a low-speed fuel system in a carburetor of internal combustion engines. In this embodiment, the same reference numerals are used to designate the same portions and members as in Fig. 8. In Fig. 9, reference numeral 21 represents an air valve capable of opening and closing the main intake passageway 12; 22 an actuator operating to open the air valve 21 by means of a vacuum produced on the downstream side of the air valve 21 in the shift from a low-speed region to a medium-speed region; 23 a low-speed system venturi formed in a bypass through which the upstream side of the air valve 21 is connected to the downstream side thereof on the downstream side of the fixed venturi 13; 24 a passageway connecting the low-speed system venturi 23 and the downstream side of the main fuel jet 16 through a slow jet 25; 26 a slow port opening into a vacuum generating section formed by the outer peripheral edge of the throttle valve 14 and the inner circumferential surface of the main intake passageway 12; and 27 a low-speed fuel passageway connecting the slow port 26 to a float chamber through the main fuel jet 16 and the slow jet 25. In such an instance, the transparent pipe body 1 is provided in a vertical section of the passageway 24 and the output control circuit 11 is constructed so that when the output of the differential amplifier 10 has a low level, an output having such a power that the opening degree of the solenoid valve 19 is different as compared with the case of the output with a high level can be supplied to the solenoid valve 19. In this embodiment, since the air valve 21 closes the main intake passageway 12 at the start of the engine or in the low-speed region of the engine, suction air is introduced into a manifold, as indicated by arrows in Fig. 9, from the downstream side of the fixed venturi 13 through the low-speed system venturi 23 with a small diameter. As a result, even if the amount of air suched into the main intake passageway 12 is relatively small, a sufficiently strong vacuum which is proportional to the square of the flow rate of air flowing through the low-speed system venturi 23 is generated therein. On the other hand, since a vacuum produced on the downstream side of the slow jet 25 is proportional to the square of the flow rate of fuel flowing through the low-speed fuel passageway 27, if the flow rate of fuel flowing through the low-speed fuel passageway 27 is controlled in accordance with the flow rate of air to be sucked in such a way that the power of the vacuum produced on the downstream side of the slow jet 25 coincides with that produced in the low-speed system venturi 23, it folllows that the mixture with a proper air-fuel ratio can continuously be supplied to the engine over the entire low-speed region. This is accomplisned by using the liquid level sensing device according to the present invention to control the opening degree of the solenoid valve 19. That is, when the liquid level of the fuel column 6 formed in the passageway 24 is positioned above a predetermined level, such an output as to make large the opening degree of the solenoid valve 19 is fed from the output control circuit 11 in virtue of an input from the light-receiving device 4 to increase the fuel flow rate, and when the liquid level of the fuel column 6 is positioned below the predetermined level, since the input is not delivered from the light-receiving device, such an output as to make small the opening degree of the solenoid valve 19 is fed from the output control circuit 11 to decrease the fuel flow rate.

As mentioned above, according to the liquid level sensing device of the present invention, even though liquid films or liquid drops attach to the inner wall of the transparent pipe body, it can be detected rapidly and accurately not only that the liquid level is in a position lower than the predetermined level, but also that the liquid level is in a position higher than the predetermined level. Therefore, the use of the liquid level sensing device according to the present invention allows fuel flow rate control with a high degree of accuracy to be attained.

## Claims

1. A liquid level sensing device, comprising:

a transparent pipe body, extending in a vertical direction, in which a clear liquid exists;

a light source means arranged to emit a light ray along a plane normal substantially to said pipe body at a predetermined position of height of said pipe body and to direct said light ray, at an incident point of said light ray on an outer peripheral surface of said pipe body, so as to make a certain angle with a normal drawn from said peripheral surface;

a light-receiving means arranged on a traveling path of said light ray traversing said pipe body when said liquid exist at said predetermined position of height in said pipe body; and

an output control circuit connected to said light-receiving means and capable of generating outputs with levels different from each other in cases where said light-receiving means receives said light ray and not.

2. A liquid level sensing device according to Claim 1, wherein:

said pipe body is upright provided in a main fuel passageway of a carburetor in the state of communicating with said main fuel passageway; and

said device further comprises a solenoid valve connected to said output control circuit and capable of controlling a flow rate of fuel to flow through said main fuel passageway.

3. A liquid level sensing device according to Claim 1, wherein:

said pipe body is provided in a passageway connecting a low-speed venturi to a low-speed fuel passageway of a carburetor; and

said device further comprises a solenoid valve connected to said output control circuit and capable of controlling a flow rate of fuel to flow through said low-speed fuel passageway.

# FIG. 1
## PRIOR ART

# FIG. 2
## PRIOR ART

# FIG. 3
## PRIOR ART

# FIG. 4

# FIG. 5

## FIG. 6

## FIG. 7

OUTPUT CONTROL CIRCUIT

OUTPUT

## FIG. 8

## FIG. 9

| | DOCUMENTS CONSIDERED TO BE RELEVANT | | EP 87112521.7 |

| Category | Citation of document with indication. where appropriate, of relevant passages | Relevant to claim | CLASSIFICATION OF THE APPLICATION (Int Cl 4) |
|---|---|---|---|
| Y | <u>DE - B - 1 253 472</u> (A. KÜCKENS) <br> * Totality; especially fig. 2,4; column 2, lines 38-52; column 4, lines 1-6 * <br> -- | 1-3 | G 01 F 23/28 <br> // F 02 M 17/02 |
| Y | <u>GB - A - 2 035 561</u> (R. HANSMANN) <br> * Fig. 1-3 * <br> -- | 1-3 | |
| Y | <u>DE - B1 - 2 522 095</u> (B. BRAUN MELSUNGEN AG) <br> * Totality * <br> -- | 1-3 | |
| Y | <u>US - A - 4 271 098</u> (HENNING et al.) <br> * Fig. 1; column 2, line 22 - column 4, line 15 * <br> -- | 1-3 | |
| A | <u>US - A - 4 325 894</u> (DATE et al.) <br> * Fig. 1,3-5; column 2, lines 53-60 * <br> ---- | 2,3 | TECHNICAL FIELDS SEARCHED (Int. Cl.4) <br><br> G 01 F <br> F 02 M |

The present search report has been drawn up for all claims

| Place of search | Date of completion of the search | Examiner |
|---|---|---|
| VIENNA | 03-12-1987 | GRONAU |